**Europäisches Patentamt**

**European Patent Office**

**Office européen des brevets**

(11) Veröffentlichungsnummer: **0 460 266 A1**

## (12) EUROPÄISCHE PATENTANMELDUNG

(21) Anmeldenummer: 90110797.9

(22) Anmeldetag: 07.06.90

(51) Int. Cl.5: **B29C 33/60**

(43) Veröffentlichungstag der Anmeldung:
**11.12.91 Patentblatt 91/50**

(84) Benannte Vertragsstaaten:
**AT BE CH DE DK ES FR GB GR IT LI LU NL SE**

(71) Anmelder: **THE DEXTER CORPORATION
One Elm Street
Windsor Locks, CT 06096(US)**

(72) Erfinder: **Hättich, Thomas, Dr.
Hauselgasse 39
W-6900 Heidelberg(DE)**
Erfinder: **Schuster, Gerhard
Pachelbelstrasse 56
W-8500 Nürnberg(DE)**

(74) Vertreter: **UEXKÜLL & STOLBERG
Patentanwälte
Beselerstrasse 4
W-2000 Hamburg 52(DE)**

(54) **Wässriges Trennmittel und dessen Verwendung.**

(57) Es wird ein neues wäßriges Trennmittel beschrieben, das als trennwirksame Substanzen Öl, Fett, Wachs, Fettamine und/oder andere übliche trennwirksame Substanzen emulgiert in Wasser als Lösungsmittel und ein spezielles Emulgatorsystem enthält, das aus einer Abmischung von neutralisierten kationischen quatären Ammoniumverbindungen mit anionischen Seifen besteht. Überraschenderweise flockt das System trotz der entgegengesetzten Ladung der beiden Emulgatorkomponenten nicht aus und führt zu einem geschmeidigeren, elastischeren und druckbeständigeren Trennmittelfilm als herkömmliche Trennmittel zur Verwendung in Verfahren zur Herstellung von Gegenständen aus Polyurethanschaum.

Die Erfindung betrifft ein wäßriges Trennmittel, das als trennwirksame Substanzen Öl, Fett, Wachs, Fettamine und/oder andere übliche trennwirksame Substanzen emulgiert in Wasser als Lösungsmittel enthält, sowie dessen Verwendung.

In der veröffentlichten europäischen Patentanmeldung 272 629 ist der Stand der Technik bezüglich der Verfahren zur Herstellung von Gegenständen aus Polyurethanschaum ausführlich beschrieben. Um die Nachteile des Standes der Technik zu vermeiden, wird ein wäßriges Trennmittel vorgeschlagen, das als trennwirksame Substanzen Öl und/oder Wachs emulgiert in Wasser als Lösungsmittel enthält und dadurch gekennzeichnet ist, daß es als weitere trennwirksame Substanz ein oder mehrere aliphatische primäre, sekundäre und/oder tertiäre Amine mit mindestens einem $C_{12}$-$C_{24}$-Alkylrest, wobei bei den sekundären und tertiären Aminen die weiteren Alkylreste $C_1$-$C_{24}$-Alkylreste sein können, und als Emulgator für das oder die Amine ein oder mehrere Ammoniumsalze mit der Formel $[NR_1R_2R_3R_4]^+X^-$ enthält, wobei $R_1$, $R_2$, $R_3$ und $R_4$ unabhängig voneinander Wasserstoff oder $C_1$-$C_{24}$-Alkylreste mit der Maßgabe bedeuten, daß mindestens einer der Reste $R_1$, $R_2$, $R_3$ und $R_4$ ein $C_1$-$C_{24}$-Alkylrest ist, und $X^-$ ein Anion bedeutet. Ein besonderes Merkmal dieses Trennmittels besteht darin, daß es sich um eine sogenannte kationische Emulsion handelt, während bis dahin nur Trennmittel in Form anionischer Emulsionen bekannt waren. Ein besonderes anwendungstechnisches Merkmal dieses Trennmittels besteht in der minimalen Ausbildung von Trennmittelrückständen nach der Entformung (kein Aufbau).

Aus der veröffentlichten europäischen Patentanmeldung 223 233 ist darüber hinaus ein Verfahren zur Herstellung von Gegenständen aus Polyurethanschaum bekannt, bei dem ein lösungsmittelfreies wäßriges Trennmittel in Kombination mit einem oder mehreren Alkali- und/oder Ammoniumsalzen von höheren $C_{18}$-$C_{30}$-Fettsäuren und einem oder mehreren höheren $C_4$-$C_{26}$-Alkoholen verwendet und die Kombination in heißem Zustand auf die Formoberfläche aufgebracht wird. Dieses Verfahren bzw. das darin verwendete wäßrige Trennmittel, bei dem es sich um eine anionische Emulsion handelt, stellen eine Alternative zu dem zuvor erwähnten Trennmittel gemäß europäischer Patentanmeldung 272 629 dar, um die geschilderten Nachteile des Standes der Technik zu vermeiden.

In der Praxis hat sich jedoch gezeigt, daß die in den beiden zuvor genannten Trennmitteln verwendeten Emulgatoren noch nicht ganz zufriedenstellend sind. Entweder sind sie häufig zu hart und spröde und führen dadurch bei der PU-Verschäumung zu Aufbau, oder sie sind sehr weich, was dazu führen kann, daß sie im Einschußbereich weggelöst werden.

Der vorliegenden Erfindung liegt dementsprechend die Aufgabe zugrunde, ein neues wäßriges Trennmittel der eingangs genannten Art vorzuschlagen, das nicht nur die vorteilhaften Eigenschaften der aus den europäischen Patentanmeldungen 272 629 und 223 233 bekannten Trennmittel aufweist, sondern darüber hinaus unter Vermeidung der oben erläuterten Unzulänglichkeiten zu einem geschmeidigen, hoch elastischen und druckbeständigen Trennmittelfilm auf der Formoberfläche der bei Verfahren zur Herstellung von Gegenständen aus Polyurethanschaum verwendeten Form führt.

Zur Lösung dieser Aufgabe wird ein wäßriges Trennmittel vorgeschlagen, das als trennwirksame Substanzen Öl, Wachs, Fett und/oder Fettamine emulgiert in Wasser als Lösungsmittel und als Emulgator ein oder mehrere Ammoniumsalze mit der Formel $[NR_1R_2R_3R_4]^+X^-$ enthält, wobei $R_1$, $R_2$, $R_3$ und $R_4$ unabhängig voneinander Wasserstoff oder substituierte oder nicht-substituierte $C_1$-$C_{25}$-Kohlenwasserstoffreste mit der Maßgabe bedeuten, daß mindestens einer der Reste $R_1$, $R_2$, $R_3$ und $R_4$ ein $C_1$-$C_{25}$-Alkylrest ist, und $X^-$ ein Anion bedeutet, und das dadurch gekennzeichnet ist, daß es Anionen von höheren $C_{10}$-$C_{30}$-Tensidsäuren enthält.

Mit anderen Worten betrifft die Erfindung ein wäßriges Trennmittel, das die oben genannten trennwirksamen Substanzen emulgiert in Wasser als Lösungsmittel und als Emulgator eine Kombination eines quatären Ammoniumsalzes (kationisches Tensid) mit einem anionischen Tensid enthält. Beide Teile (kationisch und anionisch) der Emulgatorkombination können als getrennte Rohstoffe eingesetzt oder durch wechselweise Reaktion entsprechender Rohstoffe gebildet werden.

Bevorzugte Ausführungsformen des erfindungsgemäßen Trennmittels und dessen Verwendung ergeben sich aus den Unteransprüchen sowie der folgenden Beschreibung.

Das wesentliche Merkmal des erfindungsgemäßen Trennmittels ist das darin enthaltene Emulgatorsystem, das aus einer Abmischung von neutralisierten kationischen quatären Ammoniumverbindungen mit anionischen Seifen besteht. Es hat sich völlig überraschenderweise gezeigt, daß das System trotz der entgegengesetzten Ladung dieser beiden Komponenten nicht ausflockt, sondern in der Lage ist, weitere trennwirksame Substanzen zu emulgieren.

Hinsichtlich der im erfindungsgemäßen Trennmittel vorzugsweise enthaltenen trennwirksamen Substanzen (Öl, Fett, Wachs und Fettamine) kann im wesentlichen auf die europäische Patentanmeldung 272 629 verwiesen werden. Danach können als trennwirksame Öle die bekannten aliphatischen oder aromatischen, natürlichen oder synthetischen Öle verwendet werden. Als bevorzugt hat sich die Verwendung von synthetischem Öl erwiesen, bei dem es sich um 1,4-cis-Polybutadien handelt.

Als Fette können die handelsüblichen Schmier- und Gleitmittel auf Basis natürlicher oder synthetischer Produkte versetzt mit mineralischen oder organischen Verdickern eingesetzt werden. Als Beispiel sei Vaseline genannt. Als Wachs können die üblichen gesättigten oder ungesättigten, natürlichen oder funktionellen Wachse, die als Wachskomponente für PU-Trennmittel bekannt sind, verwendet werden. Als geeignete Beispiele seien Polyethylen-, Polypropylen-, Polybutin-, Polybutadien- und Bienenwachs sowie Esterwachse und Amidwachse mit Schmelzpunkten von 30 bis 145°C genannt.

Bei den Fettaminen handelt es sich um hydrophobe Amine mit mindestens einem $C_{12}$-$C_{24}$-Alkyl- rest (siehe z.B. Hoechst-Broschüre E Hoe. 4200 "Fettamine und Folgeprodukte", Seiten 6 und 7; auf diese Broschüre sei auch hinsichtlich der Nomenklatur der Fettamine hingewiesen). Als geeignete hydrophobe Amine mit Trennwirksamkeit können aliphatische primäre, sekundäre und/oder tertiäre Amine mit Resten mit mindestens einem $C_{12}$- $C_{24}$-Alkylrest verwendet werden. Im Falle der sekundären und tertiären Amine können der zweite und der dritte Alkylrest auch kürzerkettig sein, so daß in diesen Aminen neben mindestens einem $C_{12}$-$C_{24}$-Alkylrest im übrigen ein oder zwei $C_1$-$C_{24}$- Alkylreste vorhanden sind. Wenngleich nicht-funktionelle lineare Amine bevorzugt sind, können auch funktionelle Amine wie Aminethoxylate oder polymere Amine wie basische Maleinatpolymeröle eingesetzt werden. In der Praxis werden häufig Gemische von Aminen, wie insbesondere Kokosamine, verwendet, die sich aus den erfindungsgemäß geeigneten Aminen und insbesondere den zuvor genannten Aminen zusammensetzen. Bevorzugt sind insbesondere Stearylamin, Distearylamin, Methyldistearylamin, Oleylamin und Tetradecylamin bzw. die zuvor genannten, den natürlichen Vorkommen entsprechenden Mischungen dieser Verbindungen.

Bezüglich des Ammoniumsalz-Emulgators (Kation A) sei ebenfalls auf die Angaben in der europäischen Patentanmeldung 272 629 verwiesen. Danach dient als Emulgator vorzugsweise das dem trennwirksamen Amin entsprechende Ammoniumsalz. Es können aber auch vom Amin abweichende Ammoniumsalze verwendet werden. Geeignet sind grundsätzlich Ammoniumsalze mit der allgemeinen Formel $[NR_1R_2R_3R_4]^+X^-$, in der $R_1$, $R_2$, $R_3$ und $R_4$ sowie X die oben angegebene Bedeutung besitzen. Bevorzugt ist $R_1$ eine geradkettige aliphatische Kohlenwasserstoffgruppe mit 12 bis 24 Kohlenstoffatomen und entweder (a) jede Gruppe $R_2$-$R_4$ eine Alkyl- oder Hydroxyalkylgruppe mit 1 bis 6 Kohlenstoffatomen oder eine Benzylgruppe oder (b) zwei oder drei der Gruppen $R_2$-$R_4$ bilden mit dem Stick- stoffatom einen heterocyclischen Rest und jede übrige Gruppe $R_2$-$R_4$ ist eine Alkyl- oder Hydroxyalkylgruppe mit 1 bis 6 Kohlenstoffatomen oder eine Benzylgruppe.

Es können handelsübliche quatäre Ammoniumsalze sowie Ammoniumsalze, die bei der Umsetzung der entsprechenden Amine mit Salz-, Glycol-, Zitronen-, Essig-, Propion- oder längerket- tigen $C_{12}$-$C_{24}$-Fettsäuren entstehen, verwendet werden. Bevorzugte Emulgatoren sind Distearyldi- methylammoniumchlorid, Trimethylstearylammoni- umchlorid, Stearylammoniumchlorid, Methyldistea- rylammoniumchlorid, Kokosaminacetat sowie Mi- schungen dieser Verbindungen.

Das Anion B eines anionischen Tensidsalzes des erfindungsgemäß verwendeten anionischen Emulgators kann durch ein wasserlösliches oder in Wasser dispergierbares Alkali- und/oder Ammoniumsalz einer organischen Säure mit einem geradkettigen aliphatischen Kohlenwasserstoffrest mit 12 bis 24 Kohlenstoffatomen, insbesondere einem Natrium- oder Kaliumsalz oder einem entsprechen- den Ammonium- oder substituierten Ammonium- salz geliefert werden. Andererseits kann das Anion B durch die entsprechende freie organische Säure geliefert werden. Die polare organische Gruppe des Salzes oder der Säure kann das Carboxylat-, Sulfat- oder Sulfonation sein, und die Anionen liefernde Verbindung kann mehr als eine solche polare Gruppe aufweisen. Beispiele für geeignete organische Säuren, die das Anion liefern, sind natürliche und synthetische aliphatische Carbonsäuren mit 12 bis 24 Kohlenstoffatomen, z.B. Myristin-, Palmitin-, Stearin-, Olein- und Behensäure, insbesondere solche der Seifen, wie sie durch Spalten von Triglyceridölen erhalten werden, z.B. Talgfettsäure, die ein Gemisch von Fettsäuren darstellt, die hauptsächlich aus Palmitin-, Stearin- und Leinsäure bestehen; Alkylschwefelsäuren mit 12 bis 24 Kohlenstoffatomen, z.B. Lauryl-, Cetyl- und Palmitylhydrogensulfate; Alkan- und Olefinsulfonsäuren mit 12 bis 24 Kohlenstoffatomen, z.B. Lauryl-, Myristyl-, Cetyl- und Stearylsulfonsäure, und insbesondere Olefinsulfonate aus der Umsetzung von Schwefeltrioxid mit linearen α-Olefinen oder aus der Umsetzung von Alkanen mit Schwefeldioxid und -chlorid mit nachfolgender Hydrolyse, oder aus der Reaktion von Olefinen mit Bisulfiten; Alkyletherschwefelsäuren aus der Umsetzung von molaren Mengen Alkoholen mit 12 bis 24 Kohlenstoffatomen mit 1 bis 15 Mol Ethylenoxid und anschließender Reaktion der Kondensationsprodukte mit Schwefeltrioxid; Alkylbenzolsulfonsäuren deren Alkylgruppe 12 bis 24 Kohlenstoffatome enthalten, z.B. Dodecylbenzlsulfonsäuren; Alkylsulfosuccinate, deren Alyklgruppen 12 bis 24 Kohlenstoffatome haben, aus der Umsetzung von Maleinsäureestern mit Bisulfiten; Acyloxysulfonsäuren, z.B. Acyloxyethyl- und 3-Acyloxy-2-hydroxypropylsulfonsäuren, deren Acylgruppen 13 bis 25 Kohlenstoffatome haben, z.B. Lauroyloxyethyl- und Stearoylhydroxypropylsulfonsäuren; und α-Carboxyalkylsulfonsäuren, deren Carboxyalkylgruppen 13 bis 25 Kohlenstoffatome aufweisen, z.B. sulfonierte Laurin- und Palmitinsäuren. Vorzugsweise ist das Anion ein solches, in dem eine Alkyl- oder Alkenylgruppe mit 16 bis 24 Kohlenstoffatomen vorliegt. Der Begriff "Ammoniumsalz" bezeichnet solche Neutralisationsprodukte, die durch Umsetzung von Tensidsäuren in wäßrigem Medium mit Ammoniak oder Aminen wie flüchtigen Basen, z.B. Morpholin, Methylaminopropanol, Diethylaminoethanol usw., oder nicht-flüchtigen Basen, z.B. Monoethanolamin, Triethanolamin, Isopropanolamin, α,ω- und α,γ-substituierten Diaminen wie Ethylendiamin, 1,2-Propylendiamin, 1,3-Propylendiamin, 1,4-Butylendiamin usw. erhalten werden.

Erstaunlicherweise bilden zwei wasserlösliche Komponenten (Amin/Säure) zusammen im wasseremulgierenden System (Quats/Seife) und sind in der Lage, zusätzlich weitere trennwirksame Stoffe zu emulgieren.

Das erfindungsgemäße wäßrige Trennmittel ist vollständig oder zumindest im wesentlichen frei von organischen Lösungsmitteln. Es kann hergestellt werden, indem alle Bestandteile zusammengegeben und unter Bildung der gewünschten Emulsion gründlich durchgemischt werden. Alternativ kann man zunächst eine Emulsion herstellen, in der das Wachs mit einem oder mehreren anionischen Tensiden emulgiert ist, wobei das Wachs und der Emulgator vorzugsweise in Mengen von etwa 6 bzw. 2 Gew.% vorliegen. Außerdem wird eine Emulsion hergestellt, die Öl, Fett und/oder Fettamin und kationische Emulgatoren enthält. Das Öl liegt in dieser Emulsion vorzugsweise in einer Menge von etwa 2 bis 6 Gew.% vor, während Fettamin und kationischer Emulgator zusammen etwa 2 Gew.% ausmachen. Diese beiden Emulsionen werden dann in einem Gewichtsverhältnis von 2:1 bis 1:2 miteinander vermischt, wobei es bevorzugt ist, im molaren Verhältnis eine etwas größere Menge der anionischen Emulsion zu verwenden. Es hat sich gezeigt, daß dadurch die Stabilität der Gesamtemulsion etwas verbessert wird.

Eine weitere Herstellungsmöglichkeit besteht darin, daß man zunächst eine kationische Emulsion, die Wachs, Öl, Fett und/oder Fettamine enthält und unter Zusatz von Tensidsäure herstellt und anschließend eine Base zwecks Ausbildung des oder der Alkali- und/oder Ammoniumsalze der Tensidsäuren (Verseifung) zusetzt.

Eine weitere Herstellungsmöglichkeit besteht darin, daß Amin direkt mit höherer Säure zum Emulgatorsystem quatäres Amin/Säureanion umzusetzen.

Wachs, Öl, Fett und/oder Fettamin liegen in dem erfindungsgemäßen Trennmittel üblicherweise in einer Menge von 1 bis 15 Gew.% und vorzugsweise 2 bis 4 Gew.% vor. Anionisches Tensid plus kationischer Ammoniumsalz-Emulgator machen zusammen 2 bis 6 Gew.%, vorzugsweise 1,5 bis 2,5 Gew.% des Trennmittels aus, wobei zu beachten ist, daß das Normalitätsverhältnis Kation/Anion zwischen 5:1 und 1:5, bevorzugt zwischen 2:1 und 1:3 liegt. Wie bereits oben erwähnt, ist es bevorzugt, daß das anionische Emulgatorsystem gegenüber dem Ammoniumsalz im Überschuß vorliegt, da dies zu einer besseren Stabilität der Emulsion führt.

Bei drei verschiedenen praktischen Anwendungen von Polyurethan-Schaumsystemen wurde gefunden, daß das erfindungsgemäße Trennmittel eine deutlich bessere Entformung ergibt als entsprechende Emulsionen, die aber nur das eine oder das andere der beiden Emulgatorsysteme enthalten. Durch die erfindungsgemäße Abmischung zeigt der Trennfilm völlig überraschende neue Eigenschaften wie erhöhte Druckbeständigkeit, geringe Neigung zur Verursachung von Schaumstörungen, Trennwirksamkeit und zusätzlich wasserabstoßendes Verhalten im aufgetrockneten Zustand.

So wurde bei der Herstellung von Weichintegralschaum (z.B. für Spoiler) bei Verwendung des erfindungsgemäßen Trennmittels die beste Entformbarkeit festgestellt. Die Qualität der Schaumoberfläche entsprach annähernd derjenigen bei Verwendung von herkömmlichen Trennmitteln auf Basis organischer Lösungsmittel. Bei der Herstellung von Filterschaum (z.B. Luftfilter für Kraftfahrzeuge) wurde ein positives Ergebnis überhaupt nur mit dem erfindungsgemäßen wäßrigen Trennmittel erzielt, d.h. gute Entformbarkeit war mit guter Oberflächenqualität des Schaums gepaart. Bei der Herstellung von Gegenständen aus Kaltweichschaum (z.B. Sitzkissen, Nackenstützen, Sitzpolster) wurden hinsichtlich Entformbarkeit und Qualität der Schaumoberfläche im Vergleich zu bekannten wäßrigen Trennmitteln gleich gute oder bessere Ergebnisse erhalten. Als großer Vorteil gegenüber herkömmlichen wäßrigen Trennmitteln hat sich jedoch erwiesen, daß die hergestellten Gegenstände aus Kaltweichschaum beim Flammtest selbstverlöschend waren. Dies ist offensichtlich eine gerade im Kfz-Bau äußerst wesentliche Eigenschaft, die mit vorbekannten Trennmitteln nicht erreicht werden konnte. Außerdem zeigten die Oberflächen der aus Kaltweichschaum hergestellten Gegenstände eine gute Verklebbarkeit mit Textilien oder Folien und gute Eigenschaften hinsichtlich Oberflächenklebrigkeit.

**Patentansprüche**

1. Wäßriges Trennmittel, das als trennwirksame Substanzen Öl, Wachs, Fett und/oder Fettamine emulgiert in Wasser als Lösungsmittel und als Emulgator ein oder mehrere Ammoniumsalze mit der Formel $[NR_1R_2R_3R_4]^+X^-$ enthält, wobei $R_1$, $R_2$, $R_3$ und $R_4$ unabhängig voneinander Wasserstoff oder substituierte oder nicht-substituierte $C_1$-$C_{25}$-Kohlenwasserstoffreste mit der Maßgabe bedeuten, daß mindestens einer der Reste $R_1$, $R_2$, $R_3$ und $R_4$ ein $C_1$-$C_{25}$-Alkylrest ist, und $X^-$ ein Anion bedeutet, **dadurch gekennzeichnet,** daß es Anionen von höheren $C_{10}$-$C_{30}$-Tensidsäuren enthält.

2. Trennmittel nach Anspruch 1, bei dem das oder die Anionen von höheren $C_{10}$-$C_{30}$-Tensidsäuren von entsprechenden Alkali- und/oder Ammoniumsalzen geliefert werden.

3. Trennmittel nach Anspruch 1 oder 2, das 1 bis 15 Gew.% und vorzugsweise 2 bis 4 Gew.% Wachs, Öl, Fett und/oder Fettamin enthält.

4. Trennmittel nach einem der Ansprüche 1 bis 3, das anionisches Tensid plus kationischen Ammoniumsalz-Emulgator zusammen in einer Menge von 2 bis 6 Gew.% und vorzugsweise 1,5 bis 2,5 Gew.% enthält.

5. Trennmittel nach einem der Ansprüche 1 bis 4, bei dem das Verhältnis von Kation des Ammoniumsalz-Emulgators zu Anion des anionischen Tensids 5:1 bis 1:5 und vorzugsweise 2:1 bis 1:3 beträgt.

6. Trennmittel nach einem der Ansprüche 1 bis 5, bei dem das synthetische Öl ein 1,4-cis-Polybutadien ist.

7. Verwendung des Trennmittels gemäß einem der Ansprüche 1 bis 6 in Verfahren zur Herstellung von Gegenständen aus Polyurethanschaum.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-B-1 040 163   (DOW CORNING CORP.)<br>* Spalte 1, Zeilen 43-53; Spalte 2, Zeile 51 - Spalte 3, Zeile 42; Ansprüche * | 1-5,7 | B 29 C 33/60 |
| Y | FR-A-2 306 731   (IMPERICAL CHEMICAL INDUSTRIES)<br>* Seite 1, Zeilen 10-23; Seite 2, Zeilen 10-12; Seite 7, Zeilen 22-25; Ansprüche * | 1-5,7 | |
| E | DE-C-3 842 650   (GRACE SERVICE CHEMICALS GmbH)<br>* Ganzes Dokument * | 1,2,6,7 | |
| D,X | EP-A-0 272 629   (TEROSON GmbH)<br>* Seite 3, Zeilen 28-41,44-50; Ansprüche 1,5,6,7,8 * | 1-5,7 | |
| A | GB-A-6 940 04   (N.V. DE BATAAFSCHE PETROLEUM MAATSCHAPPIJ)<br>* Seite 5, Zeilen 5-25,65-102; Ansprüche 12-15,16,17 * | 1,3 | |

| | | | RECHERCHIERTE SACHGEBIETE (Int. Cl.5) |
|---|---|---|---|
| | | | B 29 C<br>C 10 M |

Der vorliegende Recherchenbericht wurde für alle Patentansprüche erstellt

| Recherchenort | Abschlußdatum der Recherche | Prüfer |
|---|---|---|
| Den Haag | 06 Februar 91 | MOLTO PINOL F.J. |